# EUROPEAN PATENT SPECIFICATION

(11) **EP 3 527 947 B1**
(45) Date of publication and mention of the grant of the patent: **18.11.2020**
(21) Application number: 18165355.1
(22) Date of filing: 31.03.2018
(51) Int. Cl.: G01C 21/26, G01C 21/30, G05D 1/02

(54) **METHOD FOR GENERATING A SAFE NAVIGATION PATH FOR A VEHICLE AND A SYSTEM THEREOF**
VERFAHREN ZUM GENERIEREN EINES SICHEREN NAVIGATIONSPFADES FÜR EIN FAHRZEUG UND SYSTEM DAFÜR
PROCÉDÉ POUR GÉNÉRER UN TRAJET DE NAVIGATION SÛR POUR UN VÉHICULE ET SYSTÈME ASSOCIÉ

(30) Priority: 16.02.2018 IN 201841005944
(43) Date of publication of application: 21.08.2019
(73) Proprietor: Wipro Limited, 560 035 Karnataka (IN)
(72) Inventor: KUMAR, Balaji Sunil, 560102 Bengaluru (IN); SARKAR, Manas, 700127 Kolkata (IN)
(74) Representative: Finnegan Europe LLP

(56) References cited:
- CHAIRIT WUTHISHUWONG ET AL: "Safe trajectory planning for autonomous intersection management by using vehicle to infrastructure communication", EURASIP JOURNAL ON WIRELESS COMMUNICATIONS AND NETWORKING, vol. 2015, no. 1, 19 February 2015 (2015-02-19), XP055512789, DOI: 10.1186/s13638-015-0243-3
- GU TIANYU ET AL: "Focused Trajectory Planning for autonomous on-road driving", 2013 IEEE INTELLIGENT VEHICLES SYMPOSIUM (IV), IEEE, 23 June 2013 (2013-06-23), pages 547-552, XP032502044, ISSN: 1931-0587, DOI: 10.1109/IVS.2013.6629524 [retrieved on 2013-10-10]
- David González Bautista: "Functional architecture for automated vehicles trajectory planning in complex environments", , 3 April 2017 (2017-04-03), XP055478016, Retrieved from the Internet: URL:https://pastel.archives-ouvertes.fr/te l-01568505/file/2017PSLEM002_archivage.pdf
- CHRISTOS KATRAKAZAS ET AL: "Real-time motion planning methods for autonomous on-road driving: State-of-the-art and future research directions", TRANSPORTATION RESEARCH. PART C, EMERGING TECHNOLOGIES, vol. 60, 1 November 2015 (2015-11-01), pages 416-442, XP055512799, GB ISSN: 0968-090X, DOI: 10.1016/j.trc.2015.09.011

## Description

### TECHNICAL FIELD

The present disclosure relates to navigation of vehicles. Particularly, but not exclusively, the present disclosure relates to a method and a system for generating a safe navigation path for a vehicle.

### BACKGROUND

Vehicle, in particular autonomous vehicles (driverless vehicle) or semi-autonomous vehicles use data obtained from various sensors to navigate through a path. Also, various techniques are used to detect obstacles in the surroundings of the vehicle. The autonomous vehicles or semi-autonomous vehicles have a central control unit that analyse the data obtained from the sensors and helps the vehicle to traverse a path to reach a destination location from a source location. Also, the central control unit detects any obstacles and manoeuvres the obstacles by traversing the vehicle in an alternate path. The existing autonomous and semi-autonomous vehicles make use of a path determined by a dedicated path planning module. In few scenarios, the path planning module present in existing autonomous and semi-autonomous vehicles may produce a path that may be generated close to dividers or walls along a road or obstacles, even when a path could be generated along the centre of the road. Further, when a path is generated close to obstacle, the existing autonomous and semi-autonomous vehicles may experience difficulty in manoeuvring obstacles as there may not be enough space. Also, when a path in which the vehicle is traveling has a steep curve, the vehicle may not be able to traverse the curve easily when a path is not generated along the centre of the steep curve. Thus, existing autonomous vehicles does not provide an efficient solution to address the above-mentioned problems.

Chairit Wuthishuwong et al: "Safe Trajectory Planning for Autonomous Intersection Management by Using Vehicle to Infrastructure Communication", EURASIP Journal on Wireless Communications and Networking, vol. 2015, no. 1, 19 February 2015, relates to planning a safe trajectory for an autonomous vehicle at an intersection by using vehicle to infrastructure communication for exchanging information between a vehicle and an intersection manager which is the roadside infrastructure. The safe trajectory of autonomous vehicle for the autonomous intersection management is determined using discrete mathematics.

Tianyu Gu et al: "Focused Trajectory Planning for Autonomous On-road Driving", 2013 IEEE Intelligent Vehicle Symposium (IV), IEEE, 23-26 June 2013, pages 547-552, relates to focused trajectory planning for an autonomous on-road driving based on reference trajectory planning that uses lattice sampling and optimization techniques to generate a reference trajectory. Based on the focused sampling around reference trajectory, tracking trajectory planning evaluates and selects parametric trajectories that satisfy kinodynamic constraints for execution.

David Gonzalez Bautista: "Functional Architecture for Automated Vehicles Trajectory Planning in Complex Environments", PSL Research University3 April 2017, relates to functional motion planning for automated vehicles based on global and local planners. A global planner sets singular points which describe the characteristics of a road. A local planner takes these singular points and smooths the path between them, using curve interpolation techniques to achieve the minimal curvature path. A speed planning algorithm generates continuous speed profiles considering the curvature profile.

Christos Katrakazas et al: "Real-time Motion Planning Method for Autonomous On-road Driving: State-of-the-art and Future Research Directions", Transportation Research Part C, Emerging Technologies, vol. 60, 1 November 2015, pages 416-442 relates to real-time motion planning methods for autonomous driving based on incremental and local path search, wherein incremental path planning relies on searching data structures, while local path planning usually takes place in a continuous space with sampling from final states. Further disclosed is manoeuvre planning which consists of obstacle prediction followed by collision estimation.

### SUMMARY

In accordance with the aspects of the invention, there are provided: a method for generating a safe navigation path for a vehicle, a navigation path generation system for generating a safe navigation path for a vehicle, and a non-transitory computer readable medium for generating a safe navigation path for a vehicle, as set forth in claims 1, 7, and 13, respectively.

In an embodiment, the present invention relates to a method for generating a safe navigation path for a vehicle. The method comprises receiving by a navigation path generation system, a reference path between a source and a destination. The reference path is confined between a left boundary and a right boundary. The method further comprises projecting a line perpendicular to an orientation of the vehicle present at the source, to at least one of the left boundary and the right boundary. An end point of the line projected towards the left boundary lies on the left boundary and the end point of the line projected towards the right boundary lies on the right boundary. The method further comprises generating a plurality of segments along at least one of the left boundary and the right boundary, starting from the end point of the line. Further, the method comprises determining an angle between each of the plurality of segments with at least one of a horizontal reference line and a vertical reference line. Thereafter, the method comprises projecting at least one of a horizontal line and a vertical line from a predefined point of each of the plurality of segments to an opposite boundary, based on the angle between each of the plurality of segments with at least one of a horizontal reference line and a vertical reference line. Further, the method comprises determining a centre point of the at least one of the horizontal line and vertical line projected from each of the plurality of segments. Lastly, the method comprises generating a safe navigation path for the vehicle based on the centre point of the at least one of the horizontal line and vertical line projected from each of the plurality of segments.

In an embodiment, the present invention relates to a navigation path generation system for generating a safe navigation path for a vehicle. The navigation path generation system comprises an Electronic Control Unit (ECU). The ECU is configured to receive a reference path between a source and a destination. The reference path is confined between a left boundary and a right boundary. The ECU is further configured to project a line perpendicular to an orientation of the vehicle present at the source, to at least one of the left boundary and the right boundary. An end point of the line projected towards the left boundary lies on the left boundary and the end point of the line projected towards the right boundary lies on the right boundary. The ECU is further configured to generate a plurality of segments along at least one of the left boundary and the right boundary, starting from the end point of the line. The ECU is further configured to determine an angle between each of the plurality of segments with at least one of a horizontal reference line and a vertical reference line. Thereafter, projects at least one of a horizontal line and a vertical line from a predefined point of each of the plurality of segments to an opposite road boundary, based on the angle between each of the plurality of segments with at least one of a horizontal reference line and a vertical reference line. Further the ECU is configured to determine a centre point of the at least one of the horizontal line and vertical line projected from each of the plurality of segments and generate a safe navigation path for the vehicle based on the centre point of the at least one of the horizontal line and vertical line projected from each of the plurality of segments.

In an embodiment, the present invention relates to a non-transitory computer readable medium including instruction stored thereon that when processed by at least one processor cause a navigation path generation system to receive a reference path between a source and a destination. The reference path is confined between a left boundary and a right boundary. The instruction may cause the processor to project a line perpendicular to an orientation of the vehicle present at the source, to at least one of the left boundary and the right boundary. An end point of the line projected towards the left boundary lies on the left boundary and the end point of the line projected towards the right boundary lies on the right boundary. The instruction may cause the processor to generate a plurality of segments along at least one of the left boundary and the right boundary, starting from the end point of the line. The instruction may cause the processor to determine an angle between each of the plurality of segments with at least one of a horizontal reference line and a vertical reference line, project at least one of a horizontal line and a vertical line from a predefined point of each of the plurality of segments to an opposite road boundary, based on the angle between each of the plurality of segments with at least one of a horizontal reference line and a vertical reference line, determine a centre point of the at least one of the horizontal line and vertical line projected from each of the plurality of segments; and generate a safe navigation path for the vehicle based on the centre point of the at least one of the horizontal line and vertical line projected from each of the plurality of segments.

### BRIEF DESCRIPTION OF THE ACCOMPANYING DRAWINGS

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an exemplary block diagram of a navigation path generation system for generating a safe navigation path for a vehicle, in accordance with some embodiments of the present disclosure;
**Figure 2** illustrates a block diagram of internal architecture of an Electronic Control Unit (ECU) configured to generate a safe navigation path for a vehicle, in accordance with some embodiments of the present disclosure;
**Figure 3** shows an exemplary flow chart illustrating method steps for generating a safe navigation path for a vehicle, in accordance with some embodiments of the present disclosure;
**Figure 4****,** **Figure 5****,** **Figure 6****,** and **Figure 7** illustrates an example and the steps involved in generating a safe navigation path for a vehicle, in accordance with some embodiments of the present disclosure.
**Figure 8** illustrates a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration."

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

Embodiments of the present disclosure relate to generation of a safe navigation path for a vehicle. The safe navigation path is generated by a navigation path generation system. The navigation path generation system receives a reference path comprising a source location to a destination location. The reference path is confined between a left boundary and a right boundary. Further, the navigation path generation system generates segments of pre-determined length along one of the left boundary and a right boundary, present on either side of the reference path. Further, the navigation path generation system determines an angle between each of the segments and at least one of a horizontal reference line and a vertical reference line. Further, the navigation path generation system projects at least one of a horizontal line and a vertical line from a predefined point on each of the segments based on the determined angle, to meet the opposite boundary. Using a centre point of the horizontal line and vertical line projected from each of the segments, the navigation path generation system generates a safe navigation path, between the boundaries present on either side of the reference path.

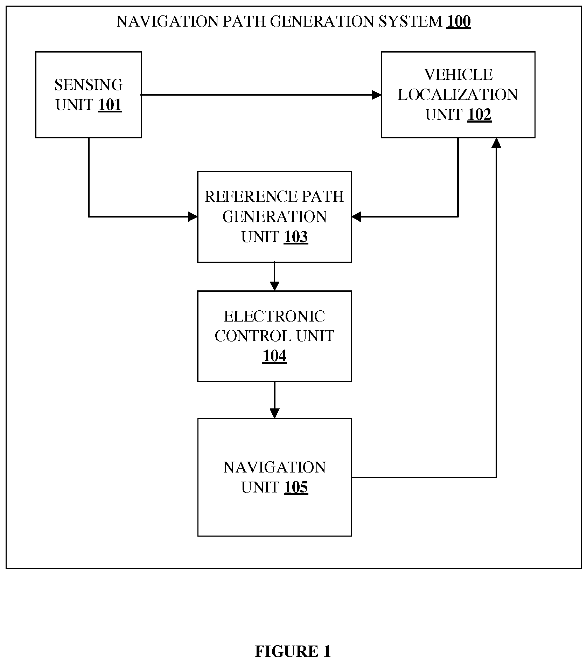

**Figure 1** illustrates an exemplary block diagram of a navigation path generation system 100 for generating a safe navigation path for a vehicle, in accordance with some embodiments of the present disclosure. The navigation path generation system 100 comprises a sensing unit 101, a vehicle localization unit 102, a reference path generation unit 103, an electronic control unit 104 and a navigation unit 105. In an embodiment, the navigation unit 105 may be configured as a separate unit. In an embodiment, the sensing unit 101 may comprise variety of sensors used for sensing the environment and surroundings of the vehicle. Various techniques, employing the variety of sensors may include, but are not limited to, camera imaging, Radio Detection and Ranging (RADAR), Light Detection and Ranging (LIDAR), odometry and computer vision. The various techniques employed by the sensing unit 101 provides information about the surroundings and environment of the vehicle. The information may include, but not limited to, location of vehicle, location of obstacles around the vehicle, distance of an obstacle from the vehicle and any other environmental parameter. A map generator unit (not shown) may receive data from the sensing unit 101 to generate a static map. In an embodiment, the static map may be generated using LIDAR data. The static map may be generated using existing techniques or any techniques that may be employed to generate the static map. The vehicle localization unit 102 may obtain information from the sensing unit 101 and may also receive information on speed of the vehicle from the navigation unit 105 and determines an initial position of the vehicle. Further, the vehicle localization unit 102 may determine a path for the vehicle based on the initial position of the vehicle and the static map. The path may be used by the vehicle for navigation. Further, the vehicle localization unit 102 may also determine the orientation of the vehicle with respect to the path. In an instance, the static map may be generated using LIDAR data, obtained from the sensing unit 101. The reference path generation unit 103 receives the static map from the map generator unit and receives data from the vehicle localization unit 102. Further, based on the static map, the reference path generation unit 103 may generate a reference path between a source location and a destination location based on parameters obtained from the sensing unit 101 and the vehicle localization unit 102. The parameters may include, but are not limited to, speed of the vehicle, initial position of the vehicle, orientation of the vehicle, Field of View (FOV) of the sensors employed in the sensing unit 101 and the like. In an embodiment, the destination location may be obtained from a user.

In an embodiment, let us consider a road or a way is joining the source location and the destination location. The reference path may be a random navigation path along the road joining the source location and the destination location. The reference path may be confined between a boundary on the left side of the road and a boundary on the right side of the road. The boundary on the left side may be referred to as a left boundary and the left boundary may be a path along a left edge of the road. The boundary on the right side may be referred to as a right boundary and the right boundary may be a path along a right edge of the road.

In an embodiment, the reference path along at least one of the left boundary and right boundary is received by the ECU 104. The ECU 104 projects a line perpendicular to the orientation of the vehicle to at least one of the left boundary or the right boundary. Further the ECU 104 generates the plurality of segments along at least one of the left boundary and the right boundary starting from an end point of the perpendicular line. Further, the ECU 104 determines an angle between each of the plurality of segments and at least one of a horizontal reference line and a vertical reference line. Further, the ECU 104 projects at least one of a horizontal line and a vertical line from a predefined point on each of the plurality of segments based on the determined angle, to meet an opposite boundary. Furthermore, the ECU 104 determines a centre point of each of the horizontal line and vertical line projected from each of the plurality of segments. Using the centre point of the horizontal line and vertical line projected from each of the segments, the ECU 104 generates a safe navigation path for the vehicle along the centre of the road. The safe navigation path may be a path along the centre of the road joining the source location and the destination location and may be used by the vehicle to navigate from the source location to the destination location safely. In an embodiment, the safe navigation path may be a straight path, a curved path, a combination of straight and curved path or any other kind of path. However, the safe path may always be a path along the centre of the road. The navigation unit 105 receives the safe navigation path and enables the vehicle to navigate from the source location to the destination location along the safe path.

In an embodiment, the one or more sensors employed by the sensing unit 101 may include, but are not limited to, a LIDAR sensor, an ultrasound sensor, a camera, a proximity sensor and the like.

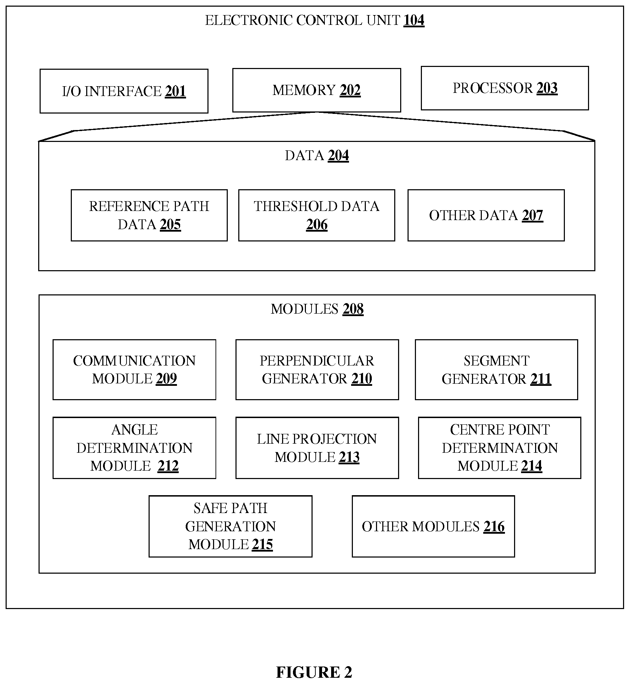

**Figure 2** illustrates internal architecture of the ECU 104 in accordance with some embodiments of the present disclosure. The ECU 104 may include at least one Central Processing Unit ("CPU" or "processor") 203 and a memory 202 storing instructions executable by the at least one processor 203. The processor 203 may comprise at least one data processor for executing program components for executing user or system-generated requests. The memory 202 is communicatively coupled to the processor 203. The ECU 104 further comprises an Input/ Output (I/O) interface 201. The I/O interface 201 is coupled with the processor 203 through which an input signal or/and an output signal is communicated.

In an embodiment, data 204 may be stored within the memory 202. The data 204 may include, for example, a reference path data 205, a threshold data 206 and other data 207.

In an embodiment, the reference path data 205 may include information about the reference path generated by the reference path generation unit 103. The reference path data 205 may include the source location, the destination location, length of the reference path, distance of left boundary and the right boundary from the reference path, and coordinates of various points involved in the formation of the reference path.

In an embodiment, the threshold data 206 may include information about the different thresholds used in the process of generating the safe navigation path. The threshold data 206 may include angular threshold for the vertical reference line and angular threshold for the horizontal reference line. The angular threshold for the vertical reference line indicates a range of angles to be considered for indicating inclination of each of the plurality of segments with the vertical reference line. The angular threshold for the horizontal reference line indicates a range of angles to be considered for indicating the inclination of each of the plurality of segments with the horizontal reference line.

In an embodiment, the other data 207 may comprise, but is not limited to, obstacle data, traffic information, terrain information, and the like. The obstacle data may indicate information on the obstacles present along the reference path. For example, the one or more obstacles in the reference path or the safe navigation path may be a wall or a divider. In another embodiment, the one or more obstacles may be a person or another vehicle.

In an embodiment, the data 204 in the memory 202 is processed by modules 208 of the ECU 104. As used herein, the term module refers to an application specific integrated circuit (ASIC), an electronic circuit, a field-programmable gate arrays (FPGA), Programmable System-on-Chip (PSoC), a combinational logic circuit, and/or other suitable components that provide the described functionality. The modules 208 when configured with the functionality defined in the present disclosure will result in a novel hardware.

In one implementation, the modules 208 may include, for example, a communication module 209, a perpendicular generator 210, a segment generator 211, an angle determination module 212, a line projection module 213, a centre point determination module 214, a safe path generation module 215 and other modules 216. It will be appreciated that such aforementioned modules 208 may be represented as a single module or a combination of different modules. Further, person of ordinary skill in the art will appreciate that in an implementation, the modules 208 may be integrated with the memory 202.

The communication module 209 facilitates communication between the ECU 104 and other units (not shown in figures) of the vehicle. In an embodiment, the other units may comprise, but are not limited to, the sensing unit 101, the vehicle localization unit 102, the reference path generation unit 103, and the navigation unit 105. For example, the communication module 209 may receive the reference path from reference path generation unit 103. In an embodiment, the communication module 209 may help in communication between the other units.

In an embodiment, the perpendicular generator 210 generates a line perpendicular to the orientation of the vehicle. The perpendicular generator 210 receives the reference path from the communication module 209. The reference path is confined between the left boundary and the right boundary. The perpendicular generator 210 generates the line perpendicular to the orientation of the vehicle present at the source location, to at least one of the left boundary and the right boundary. An end point of the line projected towards the left boundary lies on the left boundary and the end point of the line projected towards the right boundary lies on the right boundary.

In an embodiment, the segment generator 211 generates the plurality of segments along at least one of the left boundary and the right boundary. The first segment of the plurality of segments may be generated starting from the end point of the line. In an embodiment, the plurality of segments may be generated on either the left boundary or the right boundary. Each of the plurality of segments may be a straight line and may be generated with respect to the orientation of at least one of the left boundary and the right boundary. Each of the plurality of segments may have a pre-determined length. In an embodiment, the pre-determined length of each of the plurality of segments may be based on a type of the road. For an instance, consider a road with a straight profile. Each of the plurality of segments may be of a longer length. In another instance, for a road with a curved profile, each of the plurality of segments generated may be of a shorter length. In another embodiment, each of the plurality of segments may be generated at random length intervals.

In an embodiment, the angle determination module 212 determines an angle between each of the plurality of segments and at least one of the horizontal reference line and the vertical reference line. The angle between each of the plurality of segments and at least one of the horizontal reference line and the vertical reference line may be based on an angular threshold. In an embodiment, the horizontal reference line may be a line along the x axis or parallel to the x-axis (as defined by the cartesian co-ordinate system). In another embodiment, the vertical reference line may be a line along the y-axis or parallel to the y-axis (as defined by the cartesian co-ordinate system). A first angular region may be defined for the horizontal reference line and a second angular region may be defined for the vertical reference line. If the angle determined between a given segment and at least one of the horizontal reference line and vertical reference line falls in the first angular region, the given segment is considered to be inclined to the horizontal reference line. Similarly, if the angle determined between given segment and at least one of the horizontal reference line and vertical reference line falls in the second angular region, the given segment is considered to be inclined to the vertical reference line.

In an embodiment, the line projection module 213 projects at least one of a horizontal line and a vertical line from a predefined point of each of the plurality of segments to an opposite road boundary, based on the angle between each of the plurality of segments with at least one of a horizontal reference line and a vertical reference line. The predefined point may be a starting point of each of the plurality of segments. In an embodiment, the predefined point may be any point on a segment. Based on the determined angle between each of the plurality of segments and at least one of the horizontal reference line and a vertical reference line, the line projection module 213 projects either a horizontal line or a vertical line from the predefined point on each of the plurality of segments to the opposite road boundary. If the determined angle for the given segment falls in the first angular region i.e., the given segment is inclined towards the horizonal reference line, the vertical line is projected from the predefined point on the given segment to the opposite road boundary. Similarly, if the determined angle for the given segment falls in the second angular region i.e., the given segment is inclined towards the vertical reference line, the horizontal line is projected from the predefined point on the given segment to the opposite road boundary.

In an embodiment, the centre point determination module 214 determines a centre point of the horizontal line and vertical line projected from each of the plurality of segments. The centre point of the horizontal line and vertical line projected from each of the plurality of segments may be referred as centre points hereafter in the present disclosure.

In an embodiment, the safe path generation module 215, generates a safe path. The safe path may be generated by serially connecting the centre points determined by the centre point determination module 214. In an embodiment, the centre points may be curve fitted to generate the safe path along the centre of the road between the left boundary and the right boundary.

In an embodiment, the other modules 216 may include, but is not limited to, an indication module to indicate the safe path generated by the ECU 104, etc. The indication module may display the safe path generated to a user. The indication module may be one of, but not limited to a monitor, a Liquid Crystal Display (LCD), a Light Emitting Diode (LED) display and/or any other module present which is capable of displaying an output. In an embodiment the indication module may be present in a user device, wherein the user may utilize the safe path for navigation.

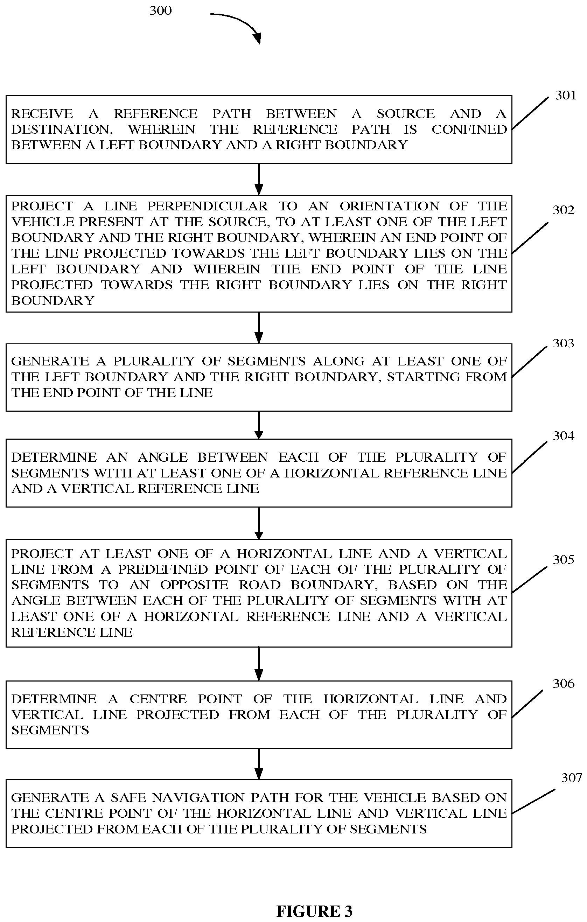

**Figure 3** illustrates exemplary method steps for generating a safe navigation path for a vehicle, in accordance with some embodiments of the present disclosure.

As illustrated in **Figure 3**, the method 300 may comprise one or more steps for generating safe navigation path for the vehicle, in accordance with some embodiments of the present disclosure. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

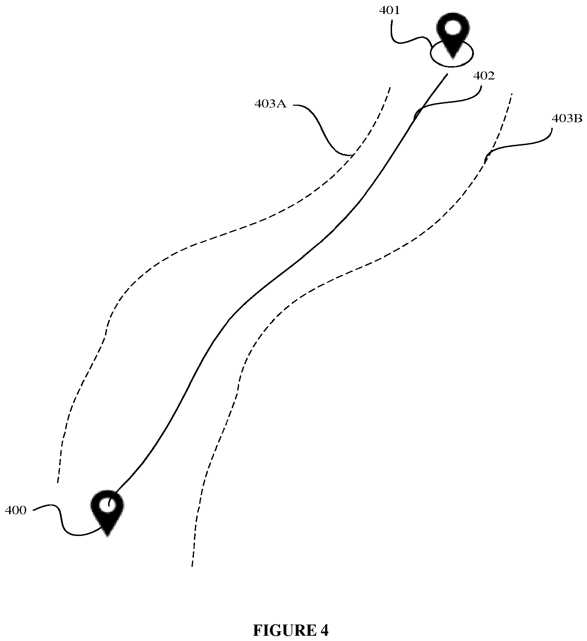

At step 301, the communication module 209 receives the reference path generated by the reference path generation unit 103. The reference path comprises the left boundary and the right boundary. The reference path received by the communication module 209 is illustrated using **Figure 4****.**

**Figure 4** illustrates the reference path received by the communication module 209. The illustrated **Figure 4** comprises a source 400, a destination 401, a reference path 402 generated from the source 400 to the destination 401, a left boundary 403A and a right boundary 403B. A road connects the source 400 to the destination 401. The left boundary 403A indicates the left edge of the road and the right boundary 403B indicates the right edge of the road. The reference path 402 generated along the road may be confined between the left boundary 403A and the right boundary 403B. The left boundary 403A and the right boundary 403B are illustrated using dotted lines in the **Figure 4****.** The reference path 402 may be a random path generated between the source 400 and the destination 401.

Referring back to **Figure 3**, at step 302, the perpendicular generator 210 generates the line perpendicular to the orientation of the vehicle. The perpendicular generator 210 receives the reference path from the communication module 209. The perpendicular generator 210 generates a line perpendicular to the orientation of the vehicle present at the source location, to at least one of the left boundary and the right boundary. An end point of the line projected towards the left boundary lies on the left boundary and the end point of the line projected towards the right boundary lies on the right boundary.

At step 303, the segment generator 211 generates the plurality of segments along at least one of the left boundary and the right boundary. The first segment of the plurality of segments may be generated starting from the end point of the line. In an embodiment, the plurality of segments may be generated on either the left boundary or the right boundary. Each of the plurality of segments may be a straight line and may be generated with respect to the orientation of at least one of the left boundary and the right boundary. Each of the plurality of segments may have a pre-determined length. In an embodiment, the pre-determined length of each of the plurality of segments may be based on the type of a road.

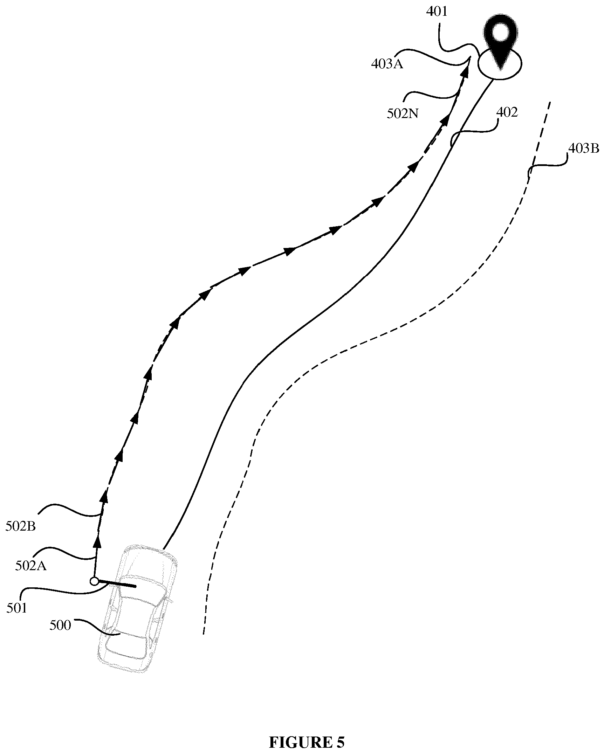

In an embodiment, the plurality of segments may be generated along either of the left boundary or the right boundary, starting from the end point of the line. The length of each of the plurality of segments may be pre-determined. In another embodiment, each of the plurality of segments may be generated at random length intervals. Generation of the perpendicular line and the plurality of segments are illustrated in **Figure 5****.**

**Figure 5** illustrates generation of the perpendicular line and the plurality of segments by the perpendicular generator 210 and the segment generator 211 respectively. The illustrated **Figure 5** comprises the source 400, the destination 401, the reference path 402, the left boundary 403A, the right boundary 403B, a vehicle 500, a perpendicular line 501, a first segment 502A, ....., a nth segment 502N. The first segment 502A, ....., the nth segment 502N may be collectively represented as plurality of segments 502. The vehicle 500 is present at the source 400 (not shown). The reference path 402 confined between the left boundary 403A and right boundary 403B as illustrated in **Figure 4** is received by the perpendicular generator 210. The perpendicular generator 210 generates a perpendicular line 501, perpendicular to the orientation of the vehicle 500 present at the source 400 to the left boundary 403A. In an embodiment the perpendicular generator 210 may generate a perpendicular line 501, perpendicular to the orientation of the vehicle 500 present at the source 400 to the right boundary 403B. Starting from the end point (illustrated as a circular point at the end of the perpendicular line 501) of the perpendicular line 501, the segment generator 211 generates the first segment 502A of pre-determined length. Generation of second segment 502B may be initiated from an end point where the first segment 502A terminates. Similarly, the segments 502B ...... 502N of the pre-determined length are generated by the segment generator 211. The segments 502B.....502N are generated along the left boundary 403A based on the orientation of the left boundary 403A as illustrated in **Figure 5****.**

Referring back to **Figure 3**, at step 304, the angle determination module 212 determines the angle between each of the plurality of segments and at least one of the horizontal reference line and vertical reference line. The angle between each of the plurality of segments and at least one of the horizontal reference line and vertical reference line may be compared with the angular threshold. In an embodiment, the horizontal reference line may be a line along the x axis or parallel to the x-axis (as defined by the cartesian co-ordinate system). In another embodiment, the vertical reference line may be a line along the y-axis or parallel to the y-axis (as defined by the cartesian co-ordinate system). Upon determining the angle between each of the plurality of segments and at least one of the horizontal reference line and vertical reference line, the angle determination module 212 determines an inclination of each of the plurality of segments with at least one of the horizontal reference line and vertical reference line based on comparison of the angle with a first angular region and a second angular region. The first angular region may be a predefined area about the horizontal reference line and the second angular region may be a predefined area about the vertical reference line. If the angle determined between a given segment and at least one of the horizontal reference line and vertical reference line falls within the first angular region, the given segment is considered to be inclined to the horizontal reference line. Similarly, if the angle determined between given segment and at least one of the horizontal reference line and vertical reference line falls within the second angular region, the given segment is considered to be inclined to the vertical reference line.

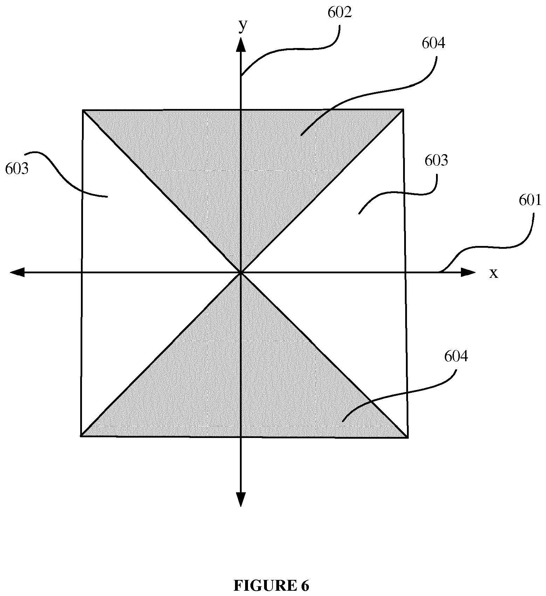

In an embodiment, when the angle determined between given segment and at least one of the horizontal reference line and vertical reference line falls exactly on a line demarcating the first angular region and second angular region, the inclination of the given segment is chosen at random or may be based on the previously generated segment. The first and second angular region is illustrated using **Figure 6****.**

**Figure 6** illustrates angular regions considered by the angle determination module 212, for determining the inclination of each of the plurality of segments with at least one of the horizontal reference line and the vertical reference line. The illustrated **Figure 6** comprises a horizontal reference line 601, a vertical reference line 602, four quadrants formed by the intersection of the horizontal reference line and the vertical reference line, a first angular region 603, and a second angular region 604. The first angular region 603 is present about the horizontal reference line 601. The second angular region 604 is present about the vertical reference line 602. The first angular region 603 and the second angular region 604 define a range of angles that lie within the first angular region 603 and the second angular region 604 respectively. For an instance the second angular region 604 may be defined between 45°-135° and 225°-315°. If the angle determined for the given segment lies within the range defined above, the given segment is considered to have an alignment with the vertical reference line.

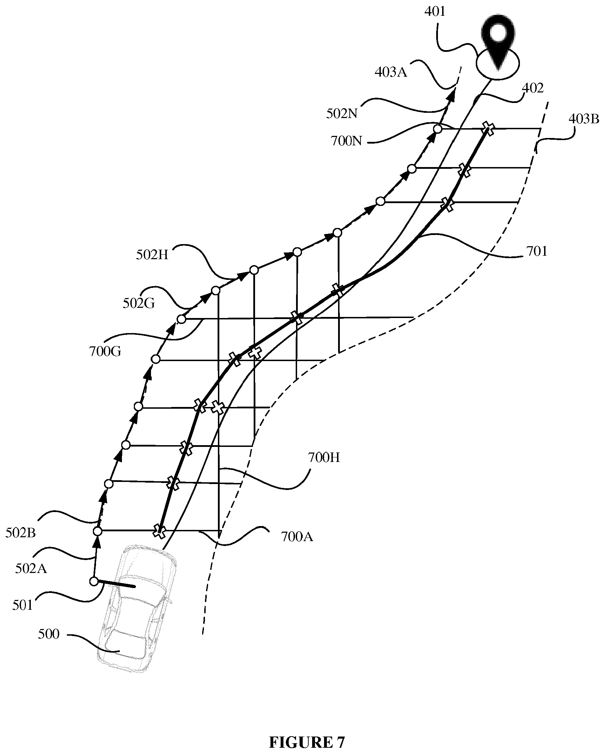

Referring back to **Figure 3**, at step 305, the line projection module 213 projects least one of the horizontal line and the vertical line from the predefined point of each of the plurality of segments to the opposite road boundary, based on the angle between each of the plurality of segments with at least one of a horizontal reference line and a vertical reference line. The predefined point may be a starting point of each of the plurality of segments. In an embodiment, the predefined point may be any defined point on each of the plurality of segments. If the determined angle for the given segment falls in the first angular region i.e., the given segment is inclined towards the horizonal reference line, the vertical line is projected from the predefined point on the given segment to the opposite road boundary. Similarly, if the determined angle for the given segment falls in the second angular region i.e., the given segment is inclined towards the vertical reference line, the horizontal line is projected from the predefined point on the given segment to the opposite road boundary. Projection of the horizontal line and vertical line is illustrated using **Figure 7****.**

**Figure 7** illustrates projection of the horizontal line and vertical line from the predefined point on each of the plurality of segments to the opposite road boundary. The illustrated **Figure 7** comprises the source 400 (not shown), the destination 401, the reference path 402, the left boundary 403A, the right boundary 403B, the vehicle 500, the perpendicular line 501, the plurality of segments 502 generated along the left boundary 403A, a horizontal/vertical line 700A........, a horizontal/vertical line 700N and a safe navigation path 701. The vehicle 500 is present at the source 400. The horizontal/vertical line 700A........, the horizontal/vertical line 700N may be collectively represented as one or more horizontal/ vertical line 700 hereafter in the present disclosure. Upon determination of the angle of each of the one or more segments with at least one of the horizontal reference line and the vertical reference line, the line projection module 213 projects one of the horizontal line and vertical line from the predefined point on each of the plurality of segments to the opposite road boundary. As illustrated in **Figure 7****,** consider the second segment 502B. Let the angle between the second segment 502B and the vertical reference line lie within the second angular region. Thus, the second segment is inclined towards the vertical reference line. The line projection module 213 projects the horizontal line 700A from the starting point of the second segment 502B to the right boundary 403B. Considering the segment 502G, the angle determined between the segment 502B and at least one of the horizontal reference line and vertical reference line falls exactly on a line demarcating the first angular region and second angular region. Thereby, a horizontal segment 700G is generated at random. Considering the segment 502H, the angle determined between the segment 502H and at least one of the horizontal reference line and vertical reference line falls in the first angular region. The segment 502H is therefore inclined to the horizontal reference line. Thereby, the line projection module 213 projects the vertical line 700H from the starting point of the segment 502H to the right boundary 403B. Similar procedure is repeated for each of the plurality of segments 502.

Referring back to **Figure 3**, at step 306, the centre point determination module 214 determines the centre point of the horizontal line and vertical line projected from each of the plurality of segments.

At step 307, the safe path generation module 215, generates the safe path. The safe path may be generated by serially connecting the centre points determined by the centre point determination module 214. In an embodiment, the centre points may be curve fitted to generate the safe path along the centre of the road between the left boundary and the right boundary. Safe navigation path generation is illustrated in **Figure 7**.

Referring back to **Figure 7**, a centre point is determined for one or more horizontal/ vertical line 700 projected from each of the plurality of segments 502. Further, the centre point determined for one or more horizontal/ vertical line 700 is illustrated by a cross mark (X) in the **Figure 7**. The safe navigation path 701 may be generated by curve fitting the centre point determined for one or more horizontal/ vertical line 700.

### Computer System

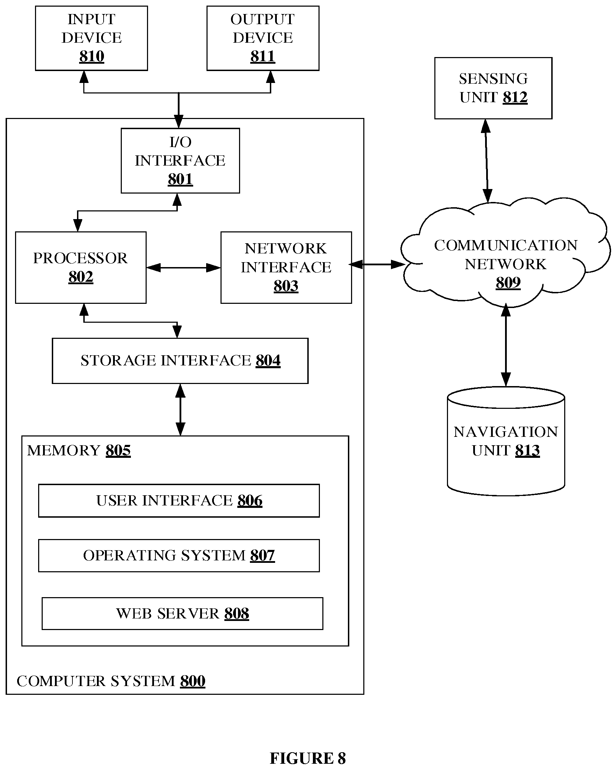

**Figure 8** illustrates a block diagram of an exemplary computer system 800 for implementing embodiments consistent with the present disclosure. In an embodiment, the computer system 800 is used to implement the navigation path generation system 100. The computer system 800 may comprise a central processing unit ("CPU" or "processor") 802. The processor 802 may comprise at least one data processor for generating a safe navigation path for a vehicle. The processor 802 may include specialized processing units such as integrated system (bus) controllers, memory management control units, floating point units, graphics processing units, digital signal processing units, etc.

The processor 802 may be disposed in communication with one or more input/output (I/O) devices (not shown) via I/O interface 801. The I/O interface 801 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 801, the computer system 800 may communicate with one or more I/O devices. For example, the input device 810 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 811 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 800 consists of a navigation path generation system 100. The processor 802 may be disposed in communication with the communication network 809 via a network interface 803. The network interface 803 may communicate with the communication network 809. The network interface 803 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 809 may include, without limitation, a direct interconnection, local area network (LAN), wide area network (WAN), wireless network (e.g., using Wireless Application Protocol), the Internet, etc. Using the network interface 803 and the communication network 809, the computer system 800 may communicate with a sensing unit 812 and a navigation unit 813. The network interface 803 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 809 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 802 may be disposed in communication with a memory 805 (e.g., RAM, ROM, etc. not shown in **Figure 8**) via a storage interface 804. The storage interface 804 may connect to memory 805 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 805 may store a collection of program or database components, including, without limitation, user interface 806, an operating system 807, web server 808 etc. In some embodiments, computer system 800 may store user/application data 806, such as, the data, variables, records, etc., as described in this disclosure. Such databases may be implemented as fault-tolerant, relational, scalable, secure databases such as Oracle ® or Sybase®.

The operating system 807 may facilitate resource management and operation of the computer system 800. Examples of operating systems include, without limitation, APPLE MACINTOSH^{R} OS X, UNIX^{R}, UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™OS/2, MICROSOFT™ WINDOWS™ (XP™, VISTA™/7/8, 10 etc.), APPLE^{R} IOS™, GOOGLE^{R} ANDROID™, BLACKBERRY^{R} OS, or the like.

In some embodiments, the computer system 800may implement a web browser 808stored program component. The web browser 808 may be a hypertext viewing application, for example MICROSOFT^{R} INTERNET EXPLORER™, GOOGLE^{R} CHROME™⁰, MOZILLA^{R} FIREFOX™, APPLE^{R} SAFARI™, etc. Secure web browsing may be provided using Secure Hypertext Transport Protocol (HTTPS), Secure Sockets Layer (SSL), Transport Layer Security (TLS), etc. Web browsers 808may utilize facilities such as AJAX™, DHTML™, ADOBE^{R} FLASH™, JAVASCRIPT™, JAVA™, Application Programming Interfaces (APIs), etc. In some embodiments, the computer system 800may implement a mail server stored program component. The mail server may be an Internet mail server such as Microsoft Exchange, or the like. The mail server may utilize facilities such as ASP™, ACTIVEX™, ANSI™ C++/C#, MICROSOFT^{R}, .NET™, CGI SCRIPTS™, JAVA™, JAVASCRIPT™, PERL™, PHP™, PYTHON™, WEBOBJECTS™, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 800 may implement a mail client stored program component. The mail client may be a mail viewing application, such as APPLE^{R} MAIL™, MICROSOFT^{R} ENTOURAGE™, MICROSOFT^{R} OUTLOOK™, MOZILLA^{R} THUNDERBIRD™, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, CD ROMs, DVDs, flash drives, disks, and any other known physical storage media.

In an embodiment, the method steps 300 may be performed in real-time.

In an embodiment, the present disclosure discloses a method for generating a safe path for a vehicle along the centre of the road. Navigation of the vehicle along the safe path ensures the safety of the vehicle and the people in the vehicle especially when the vehicle is an autonomous or semi-autonomous vehicle.

In an embodiment, the present disclosure discloses a method and system for generating a safe navigation path along the centre of the road.

A variety of optional components are described to illustrate the wide variety of possible embodiments of the invention.

When a single device is described herein, it will be readily apparent that more than one device (whether or not they cooperate) may be used in place of a single device. Similarly, where more than one device is described herein (whether or not they cooperate), it will be readily apparent that a single device may be used in place of the more than one device or a different number of devices may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **Figure 3** show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

The disclosure of the embodiments of the invention is intended to be illustrative, but not limiting, of the scope of the invention.

While various aspects and embodiments have been disclosed herein, other aspects and embodiments will be apparent to those skilled in the art. The various aspects and embodiments disclosed herein are for purposes of illustration and are not intended to be limiting.

## Claims

1. A method for generating safe navigation path (701) for a vehicle (500), the method comprising:
receiving, by a navigation path generation system (100), a reference path (402) between a source (400) and a destination (401), wherein the reference path (402) is confined between a left boundary (403A) and a right boundary (403B);
projecting, by a navigation path generation system (100), a line perpendicular to an orientation of the vehicle (500) present at the source (400), to at least one of the left boundary (403A) and the right boundary (403B), wherein an end point of the line projected towards the left boundary (403A) lies on the left boundary (403A) and wherein the end point of the line projected towards the right boundary (403B) lies on the right boundary (403B);
generating, by the navigation path generation system (100), a plurality of segments (502) along at least one of the left boundary (403A) and the right boundary (403B), starting from the end point of the line;
determining, by the navigation path generation system (100), an angle between each of the plurality of segments (502) with at least one of a horizontal reference line and a vertical reference line;
projecting, by the navigation path generation system (100), at least one of a horizontal line and a vertical line from a predefined point of each of the plurality of segments (502) to an opposite road boundary, based on the angle between each of the plurality of segments (502) with at least one of a horizontal reference line and a vertical reference line;
determining, by the navigation path generation system (100), a centre point of the at least one of the horizontal line and vertical line projected from each of the plurality of segments (502); and
generating, by the navigation path generation system (100), a safe navigation path (701) for the vehicle (500) based on the centre point of the at least one of the horizontal line and vertical line projected from each of the plurality of segments (502).

2. The method as claimed in claim 1, wherein the reference path (402) is received from a static map generated using a Light Detection and Ranging, LIDAR, system.

3. The method as claimed in claim 1 or 2, wherein each of the plurality of segments (502) is a straight line generated with respect to the orientation of at least one of the left boundary (403A) and the right boundary (403B), wherein each of the plurality of segments (502) has a pre-determined length, and wherein the pre-determined length of each of the plurality of segments (502) is based on a type of road.

4. The method as claimed in claim 1, 2, or 3, wherein the predefined point of each of the plurality of segments (502) is a starting point of each of the plurality of segments (502).

5. The method as claimed in any preceding claim, wherein the angle between each of the plurality of segments (502) with at least one of a horizontal reference line and a vertical reference line is compared with an angular threshold.

6. The method as claimed in any preceding claim, wherein the safe navigation path (701) is generated based on a curve fitting of the centre point of the at least one of the horizontal line and vertical line projected from each of the plurality of segments (502).

7. A navigation path generation system (100) for generating a safe navigation path (701) for a vehicle (500), the navigation path generation system (100) comprising;
an Electronic Control Unit, ECU, (104), configured to:
receive, a reference path (402) between a source (400) and a destination (401), wherein the reference path (402) is confined between a left boundary (403A) and a right boundary (403B);
project, a line perpendicular to an orientation of the vehicle (500) present at the source (400), to at least one of the left boundary (403A) and the right boundary (403B), wherein an end point of the line projected towards the left boundary (403A) lies on the left boundary (403A) and wherein the end point of the line projected towards the right boundary (403B) lies on the right boundary (403B);
generate, a plurality of segments (502) along at least one of the left boundary (403A) and the right boundary (403B), starting from the end point of the line;
determine, an angle between each of the plurality of segments (502) with at least one of a horizontal reference line and a vertical reference line;
project, at least one of a horizontal line and a vertical line from a predefined point of each of the plurality of segments (502) to an opposite road boundary, based on the angle between each of the plurality of segments (502) with at least one of a horizontal reference line and a vertical reference line;
determine, a centre point of the at least one of the horizontal line and vertical line projected from each of the plurality of segments (502); and
generate, a safe navigation path (701) for the vehicle (500) based on the centre point of the at least one of the horizontal line and vertical line projected from each of the plurality of segments (502).

8. The navigation path generation system (100) as claimed in claim 7, wherein the reference path (402) is received from a static map generated using a Light Detection and Ranging, LIDAR, system.

9. The navigation path generation system (100) as claimed in claim 7 or 8, wherein each of the plurality of segments (502) is a straight line generated with respect to the orientation of at least one of the left boundary (403A) and the right boundary (403B), wherein each of the plurality of segments (502) has a pre-determined length, and wherein the pre-determined length of each of the plurality of segments (502) is based on a type of road.

10. The navigation path generation system (100) as claimed in claim 7, 8, or 9, wherein the predefined point of each of the plurality of segments (502) is a starting point of each of the plurality of segments (502).

11. The navigation path generation system (100) as claimed in any of claims 7 - 10, 1 wherein the angle between each of the plurality of segments (502) with at least one of a horizontal reference line and a vertical reference line is compared with an angular threshold.

12. The navigation path generation system (100) as claimed in any of claims 7 - 11, wherein the safe navigation path (701) is generated based on a curve fitting of the centre point of the at least one of the horizontal line and vertical line projected from each of the plurality of segments (502).

13. A non-transitory computer readable medium including instruction stored thereon that when processed by at least one processor cause a navigation path generation system (100) to perform operation comprising the method of any of claims 1 - 6.

## Patentansprüche

1. Verfahren zum Erzeugen eines sicheren Navigationspfads (701) für ein Fahrzeug (500), wobei das Verfahren Folgendes umfasst:
Empfangen eines Referenzpfads (402) zwischen einer Quelle (400) und einem Ziel (401) durch ein Navigationspfaderzeugungssystem (100), wobei der Referenzpfad (402) zwischen einer linken Grenze (403A) und einer rechten Grenze (403B) begrenzt ist;
Projizieren einer Linie senkrecht zu einer Ausrichtung des an der Quelle (400) vorhandenen Fahrzeugs (500) zu mindestens einer von der linken Grenze (403A) und der rechten Grenze (403B) durch ein Navigationspfaderzeugungssystem (100), wobei ein Endpunkt der zur linken Grenze (403A) projizierten Linie an der linken Grenze (403A) liegt und wobei der Endpunkt der zur rechten Grenze (403B) projizierten Linie an der rechten Grenze (403B) liegt;
Erzeugen einer Vielzahl von Segmenten (502) entlang mindestens einer von der linken Grenze (403A) und der rechten Grenze (403B), ausgehend vom Endpunkt der Linie durch das Navigationspfaderzeugungssystem (100);
Bestimmen eines Winkels zwischen jedem von der Vielzahl von Segmenten (502) mit mindestens einer von einer horizontalen Referenzlinie und einer vertikalen Referenzlinie durch das Navigationspfaderzeugungssystem (100);
Projizieren mindestens einer von einer horizontalen Linie und einer vertikalen Linie von einem vordefinierten Punkt jedes von der Vielzahl von Segmenten (502) zu einer gegenüberliegenden Straßengrenze, basierend auf dem Winkel zwischen jedem von der Vielzahl von Segmenten (502) mit mindestens einer horizontalen Referenzlinie und einer vertikalen Referenzlinie durch das Navigationspfaderzeugungssystem (100);
Bestimmen eines Mittelpunkts der mindestens einen von der horizontalen Linie und der vertikalen Linie, die von jedem von der Vielzahl von Segmenten (502) projiziert werden, durch das Navigationspfaderzeugungssystem (100); und
Erzeugen eines sicheren Navigationspfads (701) für das Fahrzeug (500) basierend auf dem Mittelpunkt der mindestens einen von der horizontalen Linie und der vertikalen Linie, die von jedem der mehreren Segmente projiziert werden (502), durch das Navigationspfaderzeugungssystem (100).

2. Verfahren nach Anspruch 1, wobei der Referenzpfad (402) von einer statischen Karte empfangen wird, die unter Verwendung eines LIDAR-Systems (Light Detection and Ranging) erzeugt wurde.

3. Verfahren nach Anspruch 1 oder 2, wobei jedes von der Vielzahl von Segmenten (502) eine gerade Linie ist, die in Bezug auf die Ausrichtung mindestens einer von der linken Grenze (403A) und der rechten Grenze (403B) erzeugt wird; wobei jedes von der Vielzahl von Segmenten (502) eine vorbestimmte Länge aufweist und wobei die vorbestimmte Länge jedes von der Vielzahl von Segmenten (502) auf einem Straßentyp basiert.

4. Verfahren nach Anspruch 1, 2 oder 3, wobei der vordefinierte Punkt jedes von der Vielzahl von Segmenten (502) ein Ausgangspunkt jedes von der Vielzahl von Segmenten (502) ist.

5. Verfahren nach einem der vorhergehenden Ansprüche, wobei der Winkel zwischen jedem von der Vielzahl von Segmenten (502) mit mindestens einer von einer horizontalen Referenzlinie und einer vertikalen Referenzlinie mit einem Winkelschwellenwert verglichen wird.

6. Verfahren nach einem der vorhergehenden Ansprüche, wobei der sichere Navigationspfad (701) basierend auf einer Kurvenanpassung des Mittelpunkts der mindestens einen von der horizontalen Linie und der vertikalen Linien, die von jedem von der Vielzahl von Segmenten (502) projiziert werden, erzeugt wird.

7. Navigationspfaderzeugungssystem (100) zum Erzeugen eines sicheren Navigationspfads (701) für ein Fahrzeug (500), wobei das Navigationspfaderzeugungssystem (100) eine elektronische Steuereinheit (electronic control unit - ECU) (104) umfasst, die zu Folgendem konfiguriert ist:
Empfangen eines Referenzpfads (402) zwischen einer Quelle (400) und einem Ziel (401), wobei der Referenzpfad (402) zwischen einer linken Grenze (403A) und einer rechten Grenze (403B) begrenzt ist;
Projizieren einer Linie senkrecht zu einer Ausrichtung des an der Quelle (400) vorhandenen Fahrzeugs (500) zu mindestens einer von der linken Grenze (403A) und der rechten Grenze (403B), wobei ein Endpunkt der zur linken Grenze (403A) projizierten Linie an der linken Grenze (403A) liegt und wobei der Endpunkt der zur rechten Grenze (403B) projizierten Linie an der rechten Grenze (403B) liegt;
Erzeugen einer Vielzahl von Segmenten (502) entlang mindestens einer von der linken Grenze (403A) und der rechten Grenze (403B) ausgehend vom Endpunkt der Linie;
Bestimmen eines Winkels zwischen jedem von der Vielzahl von Segmenten (502) mit mindestens einer horizontalen Referenzlinie und einer vertikalen Referenzlinie;
Projizieren mindestens einer von einer horizontalen Linie und einer vertikalen Linie von einem vordefinierten Punkt jedes von der Vielzahl von Segmenten (502) zu einer gegenüberliegenden Straßengrenze, basierend auf dem Winkel zwischen jedem von der Vielzahl von Segmenten (502) mit mindestens einer horizontalen Referenzlinie und einer vertikalen Referenzlinie;
Bestimmen eines Mittelpunkts der mindestens einen von der horizontalen Linie und der vertikalen Linien, die von jedem von der Vielzahl von Segmenten (502) projiziert werden; und
Erzeugen eines sicheren Navigationspfads (701) für das Fahrzeug (500) basierend auf dem Mittelpunkt der mindestens einen von der horizontalen Linie und der vertikalen Linien, die von jedem von der Vielzahl von Segmenten (502) projiziert werden.

8. Navigationspfaderzeugungssystem (100) nach Anspruch 7, wobei der Referenzpfad (402) von einer statischen Karte empfangen wird, die unter Verwendung eines LIDAR-Systems (Light Detection and Ranging) erzeugt wurde.

9. Navigationspfaderzeugungssystem (100) nach Anspruch 7 oder 8, wobei jedes von der Vielzahl von Segmenten (502) eine gerade Linie ist, die in Bezug auf die Ausrichtung mindestens einer von der linken Grenze (403A) und der rechten Grenze (403B) erzeugt wird; wobei jedes von der Vielzahl von Segmenten (502) eine vorbestimmte Länge aufweist und wobei die vorbestimmte Länge jedes von der Vielzahl von Segmenten (502) auf einem Straßentyp basiert.

10. Navigationspfaderzeugungssystem (100) nach Anspruch 7, 8 oder 9, wobei der vordefinierte Punkt jedes von der Vielzahl von Segmenten (502) ein Ausgangspunkt jedes von der Vielzahl von Segmenten (502) ist.

11. Navigationspfaderzeugungssystem (100) nach einem der Ansprüche 7 bis 10, wobei der Winkel zwischen jedem von der Vielzahl von Segmenten (502) mit mindestens einer von einer horizontalen Referenzlinie und einer vertikalen Referenzlinie mit einem Winkelschwellenwert verglichen wird.

12. Navigationspfaderzeugungssystem (100) nach einem der Ansprüche 7 bis 11, wobei der sichere Navigationspfad (701) basierend auf einer Kurvenanpassung des Mittelpunkts der mindestens einen von der horizontalen Linie und der vertikalen Linien, die von jedem von der Vielzahl von Segmenten (502) projiziert werden, erzeugt wird.

13. Nicht-transitorisches computerlesbares Medium, das darauf gespeicherte Anweisungen beinhaltet, die bei Verarbeitung durch mindestens einen Prozessor bewirken, dass ein Navigationspfaderzeugungssystem (100) einen Vorgang ausführt, der das Verfahren nach einem der Ansprüche 1 bis 6 umfasst.

## Revendications

1. Procédé de génération d'un trajet de navigation sûr (701) pour un véhicule (500), le procédé comprenant :
la réception, par un système de génération de trajet de navigation (100), d'un trajet de référence (402) entre une source (400) et une destination (401), dans lequel le trajet de référence (402) est confiné entre une limite gauche (403A) et une limite droite (403B) ;
la projection, par un système de génération de trajet de navigation (100), d'une ligne perpendiculaire à une orientation du véhicule (500) présent à la source (400), jusqu'à au moins l'une de la limite gauche (403A) et de la limite droite (403B), dans lequel un point d'extrémité de la ligne projetée vers la limite gauche (403A) se trouve sur la limite gauche (403A) et dans lequel le point d'extrémité de la ligne projetée vers la limite droite (403B) se trouve sur la limite droite (403B) ;
la génération, par le système de génération de trajet de navigation (100), d'une pluralité de segments (502) le long d'au moins l'une de la limite gauche (403A) et de la limite droite (403B), en partant du point d'extrémité de la ligne ;
la détermination, par le système de génération de trajet de navigation (100), d'un angle entre chacun de la pluralité de segments (502) avec au moins l'une d'une ligne de référence horizontale et d'une ligne de référence verticale ;
la projection, par le système de génération de trajet de navigation (100), d'au moins l'une d'une ligne horizontale et d'une ligne verticale depuis un point prédéfini de chacun de la pluralité de segments (502) jusqu'à une limite de route opposée, sur la base de l'angle entre chacun de la pluralité de segments (502) avec au moins l'une d'une ligne de référence horizontale et d'une ligne de référence verticale ;
la détermination, par le système de génération de trajet de navigation (100), d'un point central de l'au moins une de la ligne horizontale et la ligne verticale projetée depuis chacun de la pluralité de segments (502) ; et
la génération, par le système de génération de trajet de navigation (100), d'un trajet de navigation sûr (701) pour le véhicule (500) sur la base du point central de l'au moins une de la ligne horizontale et la ligne verticale projetée depuis chacun de la pluralité de segments (502).

2. Procédé selon la revendication 1, dans lequel le trajet de référence (402) est reçu depuis une carte statique générée en utilisant un système de télédétection et télémétrie, LIDAR

3. Procédé selon la revendication 1 ou 2, dans lequel chacun de la pluralité de segments (502) est une ligne droite générée par rapport à l'orientation d'au moins l'une de la limite gauche (403A) et la limite droite (403B), dans lequel chacun de la pluralité de segments (502) a une longueur prédéterminée, et dans lequel la longueur prédéterminée de chacun de la pluralité de segments (502) est basée sur un type de route.

4. Procédé selon la revendication 1, 2 ou 3, dans lequel le point prédéfini de chacun de la pluralité de segments (502) est un point de départ de chacun de la pluralité de segments (502).

5. Procédé selon l'une quelconque des revendications précédentes, dans lequel l'angle entre chacun de la pluralité de segments (502) avec au moins l'une d'une ligne de référence horizontale et d'une ligne de référence verticale est comparé à un seuil angulaire.

6. Procédé selon l'une quelconque des revendications précédentes, dans lequel le trajet de navigation sûr (701) est généré sur la base d'un ajustement de courbe du point central de l'au moins une de la ligne horizontale et la ligne verticale projetée depuis chacun de la pluralité de segments (502).

7. Système de génération de trajet de navigation (100) destiné à générer un trajet de navigation sûr (701) pour un véhicule (500), le système de génération de trajet de navigation (100) comprenant : une unité de commande électronique, ECU, (104), configurée pour :
recevoir, un trajet de référence (402) entre une source (400) et une destination (401), dans lequel le trajet de référence (402) est confiné entre une limite gauche (403A) et une limite droite (403B) ;
projeter une ligne perpendiculaire à une orientation du véhicule (500) présent à la source (400), jusqu'à au moins une de la limite gauche (403A) et la limite droite (403B), dans lequel un point d'extrémité de la ligne projetée vers la limite gauche (403A) se trouve sur la limite gauche (403A) et dans lequel le point d'extrémité de la ligne projetée vers la limite droite (403B) se trouve sur la limite droite (403B) ;
générer une pluralité de segments (502) le long d'au moins l'une de la limite gauche (403A) et la limite droite (403B), en partant du point d'extrémité de la ligne ;
déterminer un angle entre chacun de la pluralité de segments (502) avec au moins l'une d'une ligne de référence horizontale et d'une ligne de référence verticale ;
projeter, au moins l'une d'une ligne horizontale et d'une ligne verticale depuis un point prédéfini de chacun de la pluralité de segments (502) jusqu'à une limite de route opposée, sur la base de l'angle entre chacun de la pluralité de segments (502) avec au moins l'une d'une ligne de référence horizontale et d'une ligne de référence verticale ;
déterminer, un point central de l'au moins une de la ligne horizontale et la ligne verticale projetée depuis chacun de la pluralité de segments (502) ; et
générer, un trajet de navigation sûr (701) pour le véhicule (500) sur la base du point central de l'au moins une de la ligne horizontale et la ligne verticale projetée depuis chacun de la pluralité de segments (502).

8. Système de génération de trajet de navigation (100) selon la revendication 7, dans lequel le trajet de référence (402) est reçu depuis une carte statique générée en utilisant un système de télédétection et télémétrie, LIDAR

9. Système de génération de trajet de navigation (100) selon la revendication 7 ou 8, dans lequel chacun de la pluralité de segments (502) est une ligne droite générée par rapport à l'orientation d'au moins une de la limite gauche (403A) et la limite droite (403B), dans lequel chacun de la pluralité de segments (502) a une longueur prédéterminée, et dans lequel la longueur prédéterminée de chacun de la pluralité de segments (502) est basée sur un type de route.

10. Système de génération de trajet de navigation (100) selon la revendication 7, 8 ou 9, dans lequel le point prédéfini de chacun de la pluralité de segments (502) est un point de départ de chacun de la pluralité de segments (502).

11. Système de génération de trajet de navigation (100) selon l'une quelconque des revendications 7 à 10, dans lequel l'angle entre chacun de la pluralité de segments (502) avec au moins l'une d'une ligne de référence horizontale et d'une ligne de référence verticale est comparé à un seuil angulaire.

12. Système de génération de trajet de navigation (100) selon l'une quelconque des revendications 7 à 11, dans lequel le trajet de navigation sûr (701) est généré sur la base d'un ajustement de courbe du point central de l'au moins une de la ligne horizontale et la ligne verticale projetée depuis chacun de la pluralité de segments (502).

13. Support lisible par ordinateur non transitoire comprenant des instructions stockées sur celui-ci qui, lorsqu'elles sont traitées par au moins un processeur, amènent un système de génération de trajet de navigation (100) à effectuer une opération comprenant le procédé selon l'une quelconque des revendications 1 à 6.
